# EUROPEAN PATENT APPLICATION

(11) **EP 3 747 942 A1**
(43) Date of publication of application: **09.12.2020**
(21) Application number: 19178532.8
(22) Date of filing: 05.06.2019
(51) Int. Cl.: C08K 5/5313, C08K 5/5333, C08K 5/5357, C08K 5/5397, C08K 5/00, C07F 9/32, C07F 9/38, C07F 9/53

(54) **BRIDGED PHOSPHORUS BASED FLAME RETARDANTS**

(71) Applicant: EMPA Eidgenössische Materialprüfungs- und Forschungsanstalt, 8600 Dübendorf (CH)
(72) Inventor: The designation of the inventor has not yet been filed
(74) Representative: Schmauder & Partner AG Patent- & Markenanwälte VSP

(57) **Abstract**

The invention relates to novel bridged phosphorus compounds comprising an alkyl sulfone bridge or an alkyl phosphine oxide bridge with the general formula (I) 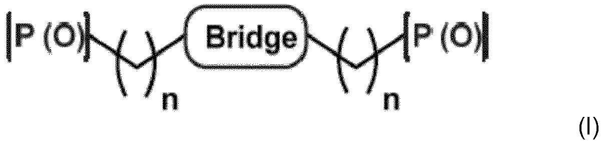 wherein n is 2 or 3, and wherein 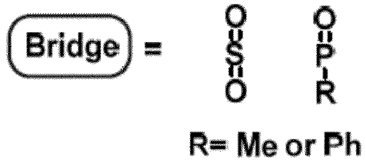 and wherein [**P(O)**]**-H** is selected from various phosphorus containing compounds. Such bridged compounds are useful as flame retardant substances, particularly as an admixture into polymeric materials.

## Description

### Technical Field of the Invention

The present invention relates to novel bridged phosphorus compounds comprising an alkyl sulfone bridge or an alkyl phosphine oxide bridge and to the use of such bridged compounds as flame retardant substances.

### Background of the Invention

From many years, phosphorus-containing compounds of various oxidation states have been used as flame retardants for polymeric materials. These phosphorus-containing flame retardants can be incorporated into the polymer chain during its polymerization or as additives. Sulfur based additives have also proven to be effective as flame retardants in many polymeric systems such as polyurethane, polycarbonate, and glass-fiber-reinforced poly(ethylene terephthalate). Nowadays, FRs are mostly used as systems comprising of several components. In these systems, sulfur may act alone or in combination with other elements such as phosphorus, nitrogen, alkali metals, or with silicon to retard the material [1-4]. Such a combination can lead to the reduction of the load of FRs in the material and improved flame-retardant efficacy. Synergism means that the total flame retardancy outcome is higher than the amount of the single components' effects. Many synergistic systems based on phosphorous and nitrogen, metal hydroxides and salts have been developed in recent years. For instance, recently DOPO based phosphonamidate (EDA-DOPO) has been shown to be non-toxic and successfully up-scaled in the industry [5]. Generally, it is believed that synergism encourages the cross-linking of polymeric chains during the thermal decomposition process. Such combinations boost the retention of phosphorus in the condensed phase and produce thermally stable char. Additionally, the density of the residue formed at elevated temperatures increases and the matrix is more likely to be able to be retained during the combustion process, consequently contributing to condensed-phase action and giving higher char yields. The mode of flame-retardant action of sulphur is believed to be somehow similar to that of phosphorus, by forming the sulfonated or sulfur containing gases which dilute or cool the vapor phase or transform into some form of char and thus slow the combustion reactions [6-8]. Furthermore, sulfur containing polymers in general (e.g., polyphenylene sulfide, polysulfone, etc.), are capable of holding an excellent thermal stability, and have outstanding mechanical properties with extraordinary corrosion resistance, meeting the demands for use in hot and hostile environments [9, 10].

Polypropylene (PP) is a thermoplastic polymer used widely in many applications, such as household appliances, automotive interior, chemical building materials, electronic appliances and other industries due to its properties such as its low density, excellent electrical insulative, low toxicity, and ease of processing and molding [11-13]. However, PP is highly flammable material because of a high amount of methyl groups (CH₃), it burns easily with a quick fire speed, and it yields high amounts of toxic gases during combustion, which are dangerous for the human life and limits the polypropylenes to use it in diverse applications. Polyurethanes are the broad class of materials used widely in many applications and a number of classes of polymers suitable for the production of foams (rigid or flexible), coatings or adhesives. Rigid polyurethane foam (RPUF) as an insulation material is used in many fields of applications, especially in buildings, due to its superior physical and mechanical properties and low thermal conductivity, while flexible ones used for application in a variety of consumer and commercial products, including bedding, furniture, automotive interiors, carpet underlay and packaging [14]. As a result of their extensive use in safe fire applications, it is necessary to protect them from fire using FRs.

Bridged phosphorus compounds would allow for increasing the phosphorus content in the flame-retardant molecule and thus help reduce the actual amount of additive needed to get satisfactory fire performance. New phosphorus-based bridged flame-retardants were incorporated in polymers and further investigated for flame retardancy. Only a few-bridged phosphorus compounds were known so far, however, none of them are suitable for industrial- upscaling.

### References for section "Background of the invention"

[1] Laufer, G., et al., Exceptionally Flame Retardant Sulfur-Based Multilayer Nanocoating for Polyurethane Prepared from Aqueous Polyelectrolyte Solutions. ACS Macro Letters, 2013. 2(5): p. 361-365.
[2] Yuan, D., H. Yin, and X. Cai, Synergistic effects between silicon-containing flame retardant and potassium-4-(phenylsulfonyl)benzenesulfonate (KSS) on flame retardancy and thermal degradation of PC. Journal of Thermal Analysis and Calorimetry, 2013. 114(1): p. 19-25.
[3] Zhao, C.-S., et al., A novel halogen-free flame retardant for glass-fiber-reinforced poly(ethylene terephthalate). Polymer Degradation and Stability, 2008. 93(6): p. 1188-1193.
[4] Chang, S., et al., The comparison of phosphorus-nitrogen and sulfur-phosphorus-nitrogen on the anti-flammability and thermal degradation of cotton fabrics. Fibers and Polymers, 2017. 18(4): p. 666-674.
[5] Gaan, S., et al., Phosphonamidates, production methods and flame retardant applications. 2013, EMPA Eidgenoessische Materialpruefungs- und Forschungsanstalt, Switz.; Fritz Nauer AG . p. 52pp.
[6] Fontenot, K.R., et al., The thermal degradation pathway studies of a phosphazene derivative on cotton fabric. Polymer Degradation and Stability, 2015. 120: p. 32-41.
[7] Nguyen, T.-M., et al., Thermal decomposition reactions of cotton fabric treated with piperazine-phosphonates derivatives as a flame retardant. Journal of Analytical and Applied Pyrolysis, 2014. 110: p. 122-129.
[8] Jian, R., et al., Low-flammability epoxy resins with improved mechanical properties using a Lewis base based on phosphaphenanthrene and 2-aminothiazole. Journal of Materials Science, 2017. 52(16): p. 9907-9921.
[9] Jutemar, E.P. and P. Jannasch, Influence of the Polymer Backbone Structure on the Properties of Aromatic lonomers with Pendant Sulfobenzoyl Side Chains for Use As Proton-Exchange Membranes. ACS Applied Materials & Interfaces, 2010. 2(12): p. 3718-3725.
[10] Abate, L., et al., Thermal and rheological behaviours of some random aromatic amino-ended polyethersulfone/polyetherethersulfone copolymers. Polymer Degradation and Stability, 2006. 91(12): p. 3230-3236.
[11] Liang, J.-Z., F.-J. Li, and J.-Q. Feng, Mechanical properties and morphology of intumescent flame retardant filled polypropylene composites. Polymers for Advanced Technologies, 2014. 25(6): p. 638-643.
[12] Chen, X., et al., Effects of magnesium hydroxide and its surface modification on crystallization and rheological behaviors of polypropylene. Polymer Composites, 2009. 30(7): p. 941-947.
[13] Lv, P., et al., Study on effect of polydimethylsiloxane in intumescent flame retardant polypropylene. Journal of Polymer Research, 2009. 16(2): p. 81-89.
[14] Neisius, M., et al., Phosphoramidate-Containing Flame-Retardant Flexible Polyurethane Foams. Ind. Eng. Chem. Res., 2013. 52(29): p. 9752-9762

### Summary of the Invention

According to one aspect of the invention, there are provided novel bridged phosphorus compounds comprising an alkyl sulfone bridge or an alkyl phosphine oxide bridge, the compounds being selected from the group consisting of: 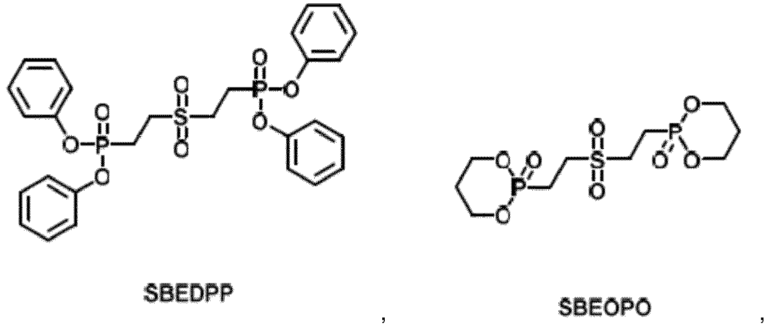 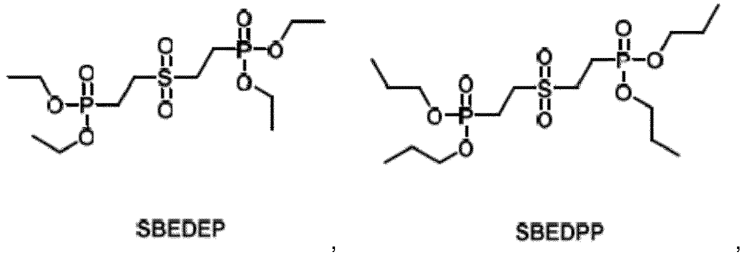 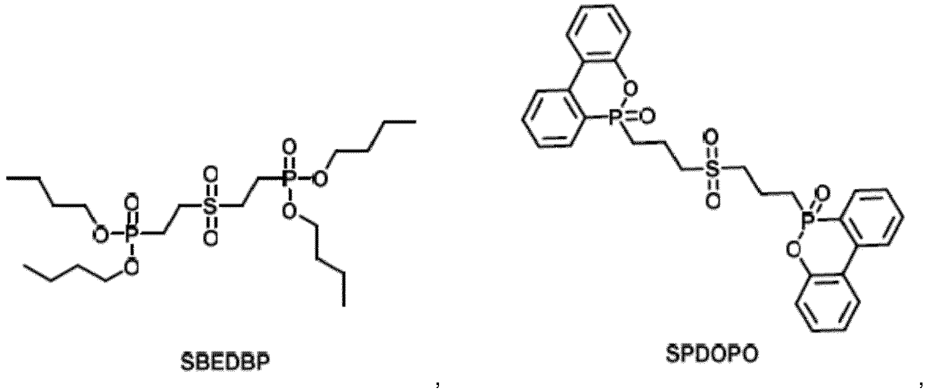 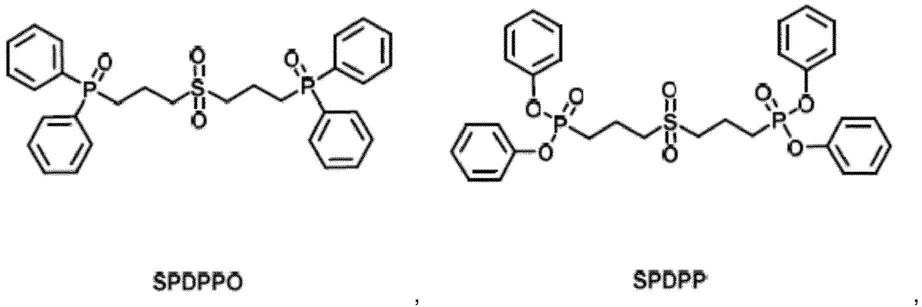 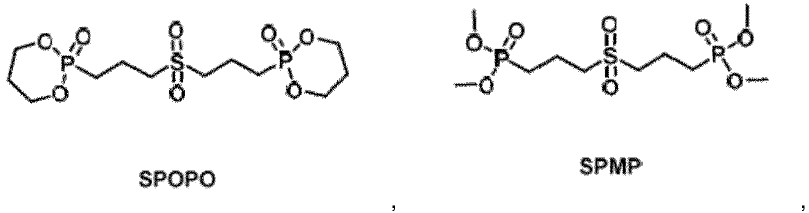 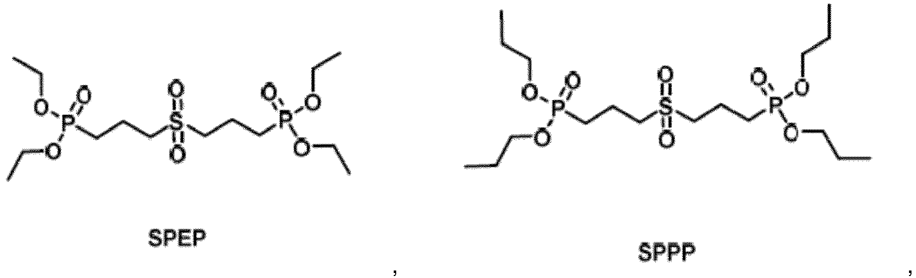 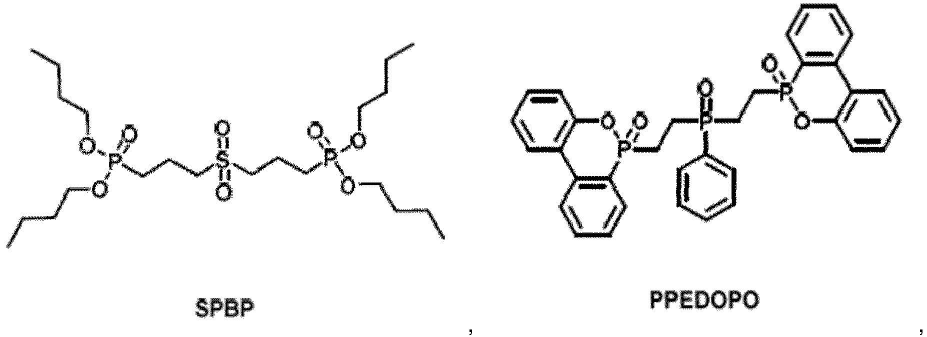 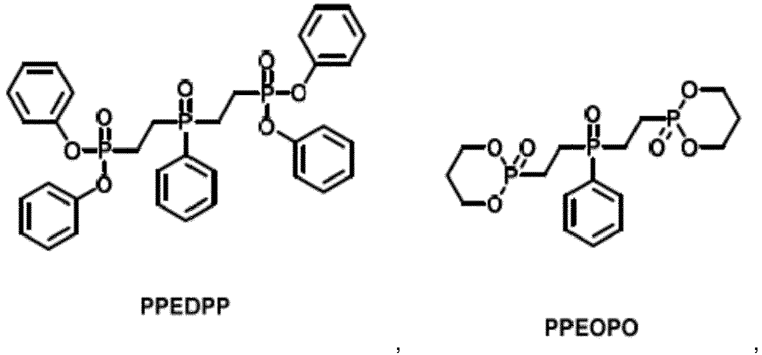 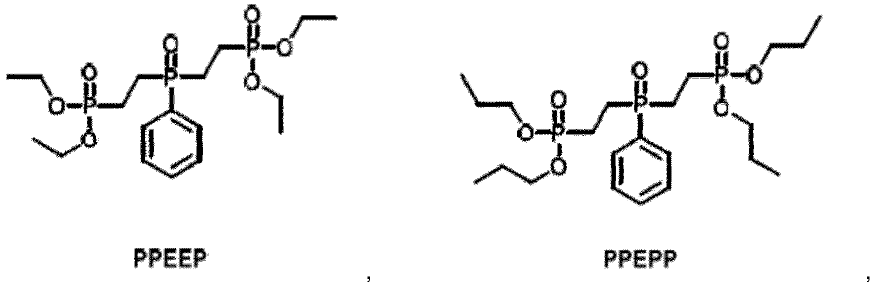 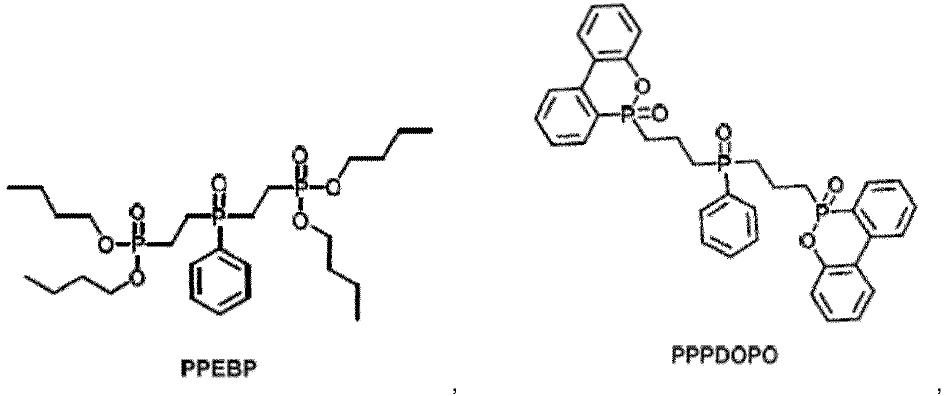 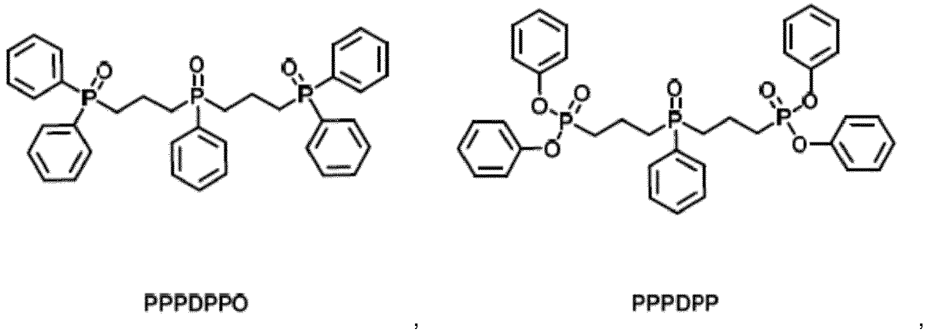 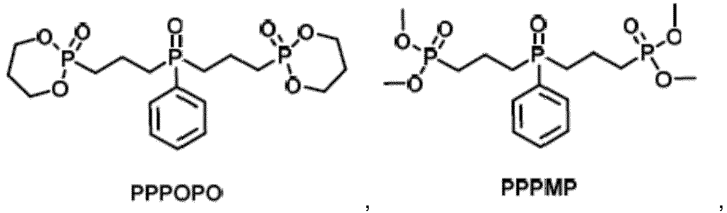 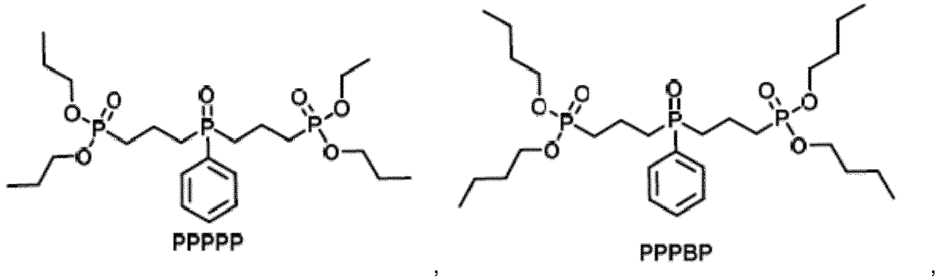 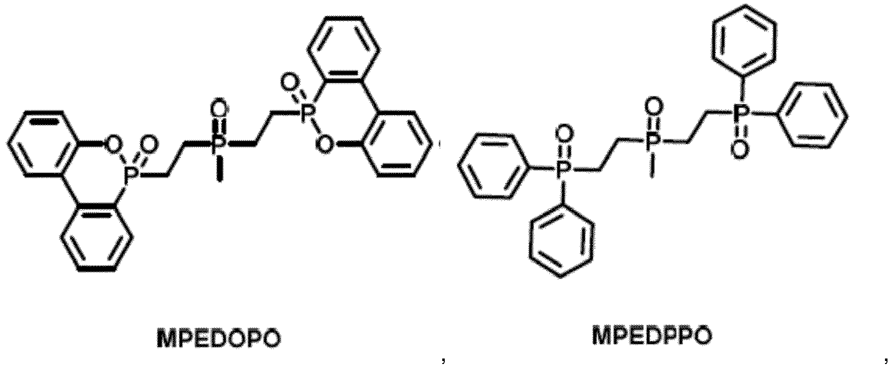 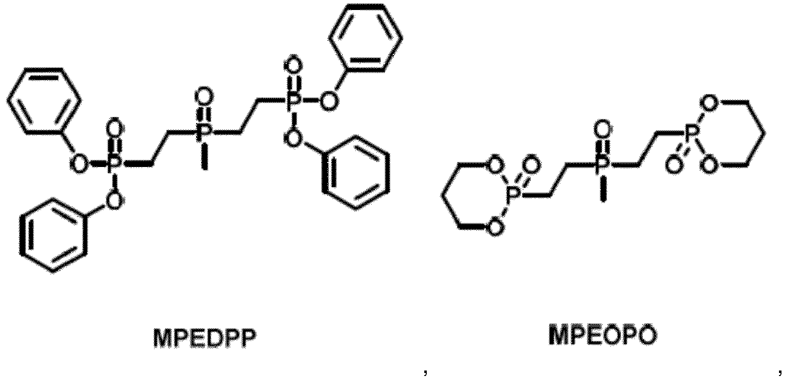 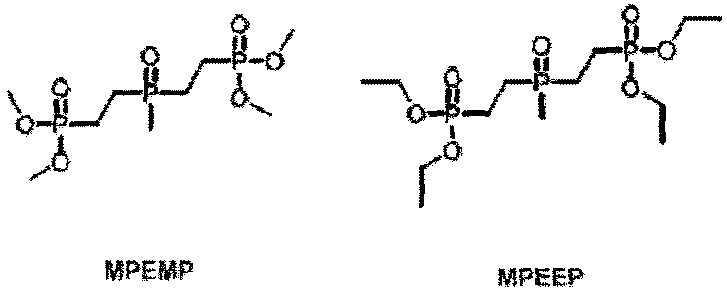 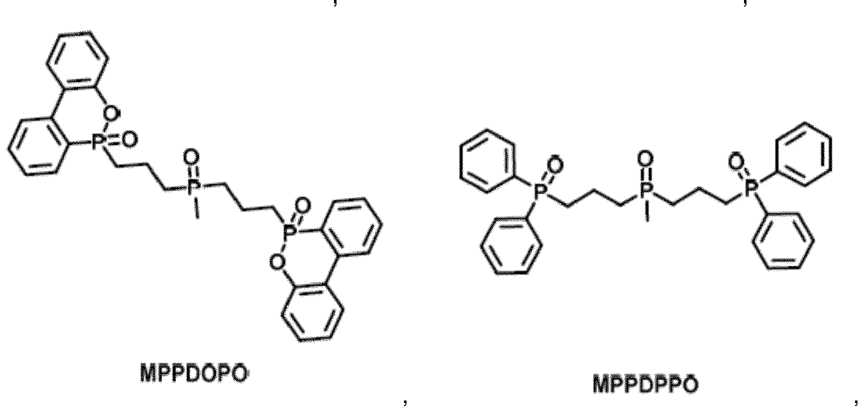 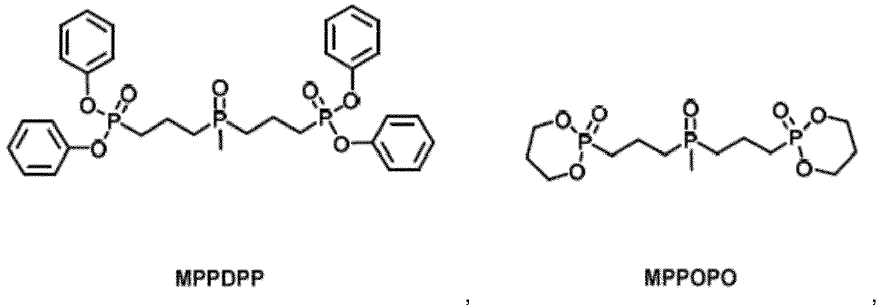 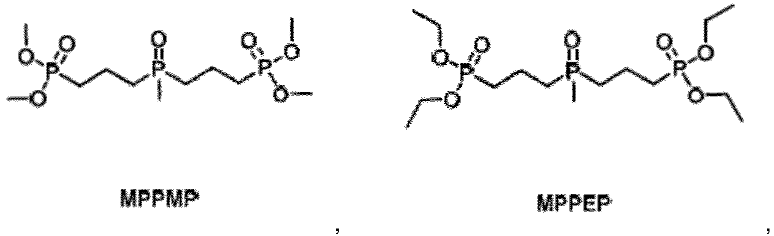 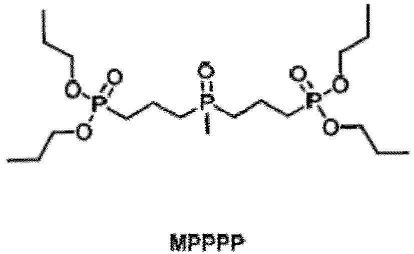 and

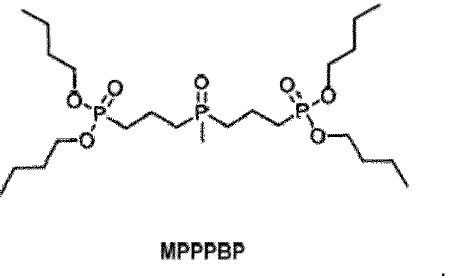

The compounds were found to have flame retardant properties and to be readily blendable into melt processable polymers.

According to another aspect of the invention, a bridged phosphorus compound with the general formula (I) 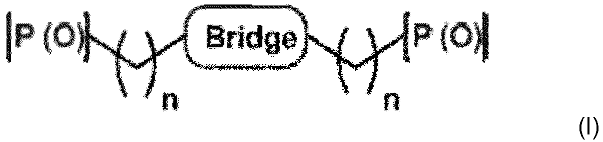 wherein n is 2 or 3, and wherein 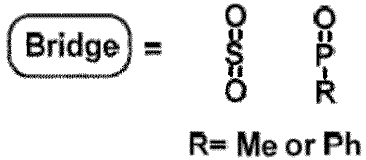 and wherein [**P(O)**]**-H** is selected from the group consisting of: 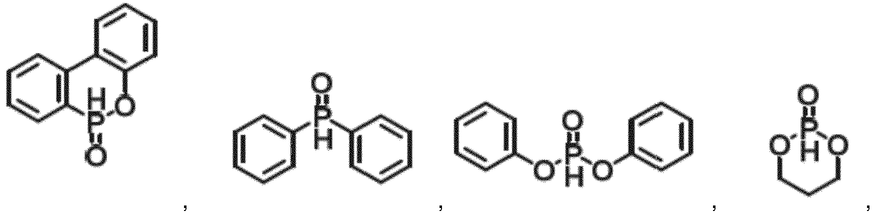 and 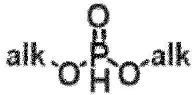 with alk = CH₃, C₂H₅, C₃H₇, or C₄H₉,
is used as a flame-retardant substance.

According to a further aspect of the invention, there is provided a polymeric material with improved flame resistance, comprising a bridged phosphorus compound with the general formula (I) as defined above.

According to a still further aspect, a method of preparing an alkyl sulfone bridged phosphorus compound with the general formula (I) as defined above comprises the step of charging
- one equivalent of either divinyl sulfone or phenyldivinylphosphine oxide or methyldivinylphospine oxide,
- two equivalents of the compound [**P(O)**]**-H**, and
- an apolar solvent
into a reaction vessel, followed by heating, cooling to room temperature and separating off a crystalline product thus obtained.

The underlying reaction scheme for the preparation of alkyl sulfone bridged phosphorus compounds can be represented as follows:

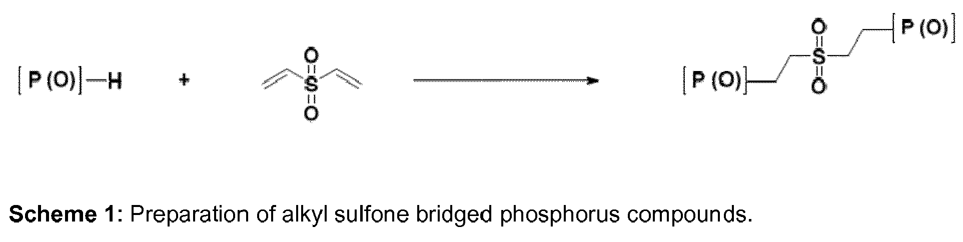

Advantageous embodiments are defined in the dependent claims.

According to certain embodiments (claims 3 and 8), the bridged phosphorus compound is selected from the following group: 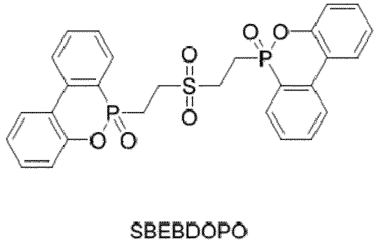 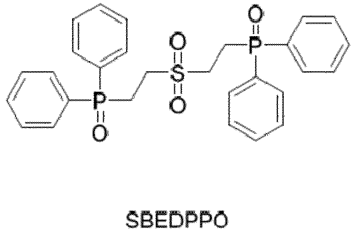 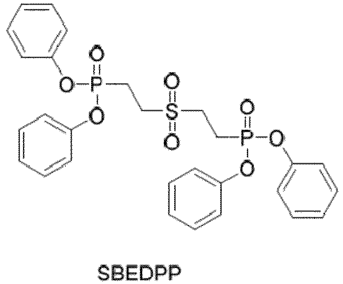 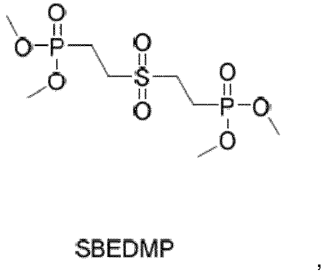 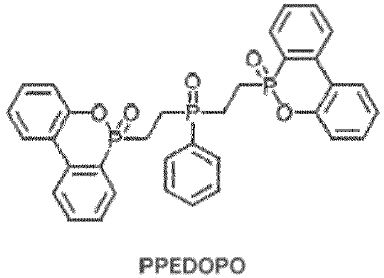 and

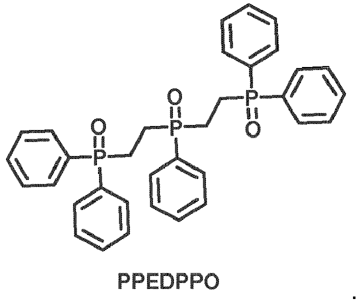

According to one embodiment (claim 4), the bridged phosphorus compound is admixed in a polymeric material. In certain embodiments (claim 5), the polymeric material is polypropylene. In other embodiments (claim 6), the polymeric material is a flexible polyurethane foam.

According to one advantageous embodiment (claim 9), the polymeric material is polypropylene and the bridged phosphorus compound is pre-sent in an amount of 2 to 20%, preferably about 5 to 15% by weight.

According to another advantageous embodiment (claim 10), the polymeric material is a flexible polyurethane foam and the bridged phosphorus compound is present in an amount of 0.5 to 5%, preferably about 1 to 2% by weight.

### Brief description of the drawings

The above mentioned and other features and objects of this invention, and the manner of achieving them, will become more apparent and this invention itself will be better understood by reference to the following description of various embodiments of this invention taken in conjunction with the accompanying drawings, wherein are shown:

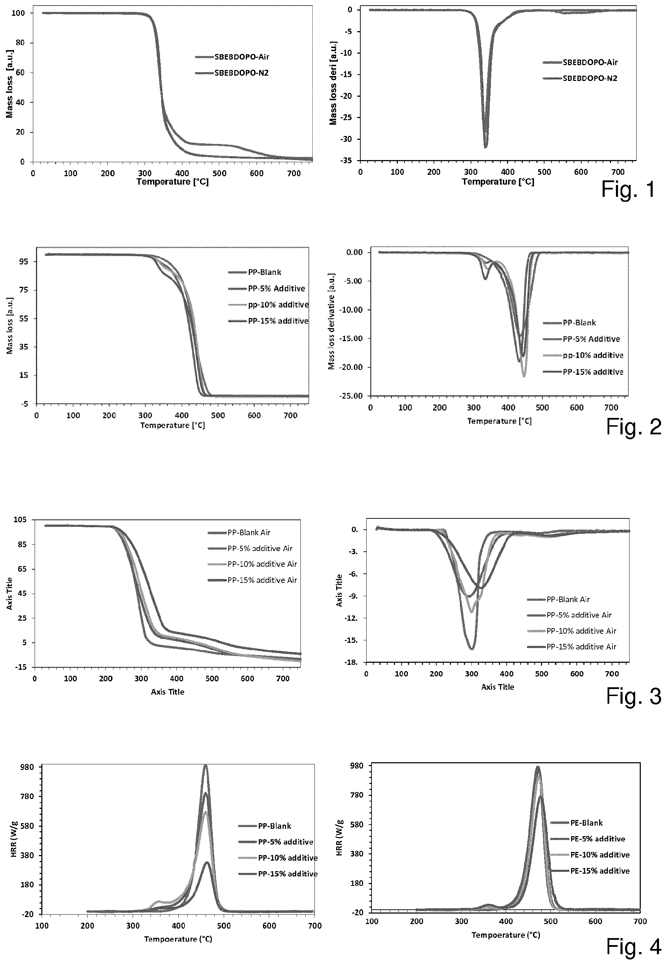

- Fig. 1: TGA (left panel) and DTG (right panel) curves of SBEBDOPO measured under nitrogen and air atmosphere;
- Fig. 2: TGA (left panel) and DTG (right panel) curves of PP/SBEBDOPO measured under nitrogen atmosphere;
- Fig. 3: TGA (left panel) and DTG (right panel) curves of PP/SBEBDOPO measured under air atmosphere;
- Fig. 4: TGA (left panel) and DTG (right panel) curves of PP/SBEBDOPO measured under air atmosphere;

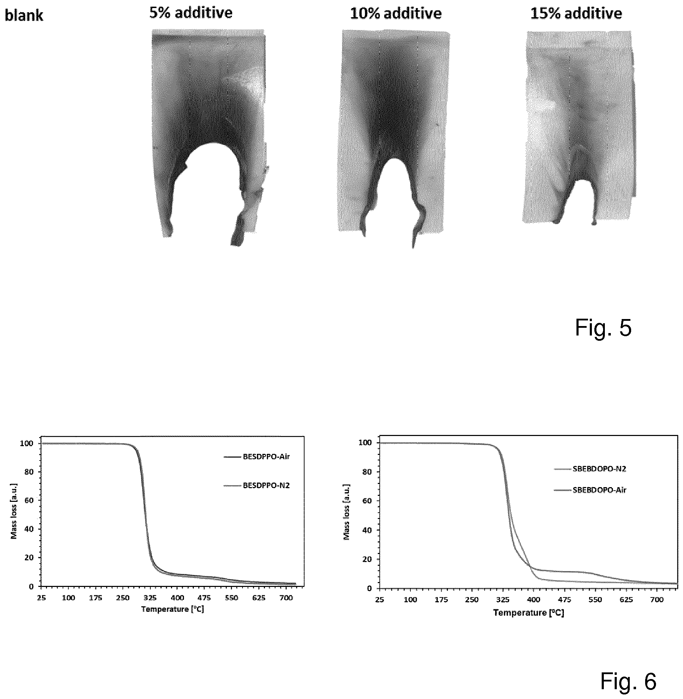

- Fig. 5: digital photographs of vertical burning test PP/SBEBDOPO; and
- Fig. 6: TGA curves of SBEDPPO (left panel) and of SBEBDOPO (right panel) measured under nitrogen and air atmosphere.

### Detailed description of the invention

### 1. Alkyl sulfone bridged phosphorus compounds

Alkyl sulfone bridged phosphorus compounds obtainable by the addition reaction of a suitable P(O)-H compound to divinyl sulfone have been studied and found to be suitable as flame retardant additives, particularly for polypropylene and flexible polyurethane foams. Out of four compounds, three were already known in the literature, but their application as flame retardants was not known.

Although some methods for the preparation of alkyl sulfone bridged phosphorus compounds¹⁻¹⁰ were known, they are suitable for small scale reactions only and are not feasible for being carried out as industrial scale reactions.

In the present work, all the synthesized compounds were synthesized with a new synthetic method which was shown to work on a reaction scale of about 200 g. The thermal properties of the products were investigated thoroughly. Furthermore, their effectiveness as flame retardants and their influence on the physical properties of the polymers to which they were added, namely to polypropylene and to flexible polyurethane foams, were also investigated. Four compounds 1, 2, 3, and 4 (see below) were synthesized. Three of them, namely 1⁵, 2⁵ and 4¹⁰ were already known in literature, though not in relation to flame retardancy.

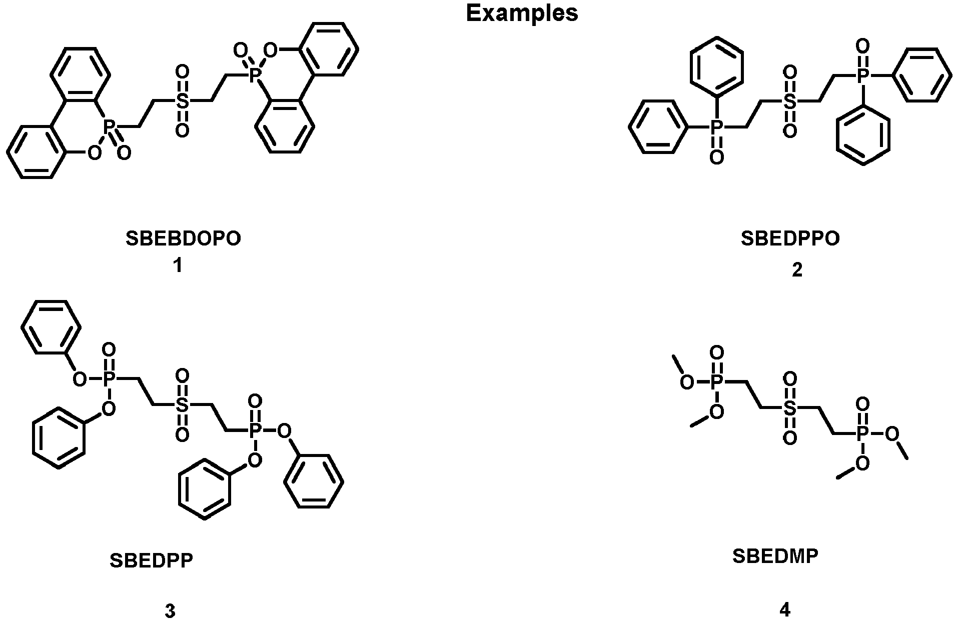

### Examples of alkyl sulfone bridged phosphorus compounds

In this study, we have synthesized flame-retardants (FRs) additive comprising of sulfur and phosphorus by the addition reaction of P(O)-H bonds to divinyl sulfone. Chemical structures of all synthesized FRs were characterized by NMR. The flame retardancy of synthesized FRs was further investigated by the incorporation in polypropylene (PP) and flexible polyurethane (PU). Thermal properties and flame retardancy of composites were comprehensively investigated. Fire test results of the PU foams showed that by the loading 1 wt. % phosphorus content, compounds **2** and **4** have superior flame retardant (FR) performance compared to compound **1** and **3.** The TGA and pyrolysis combustion flow calorimeter (PCFC) analysis showed that all compounds are most active in the gas-phase. For PP when 10 wt. % **1** used, an LOI value of 24.3% was achieved, and the material successfully passed the vertical burning test.

### Materials

9,10-dihydro-9-oxa-10-phosphaphenanthrene-10-oxide (DOPO) was purchased from Metadynea GmbH (Austria), Divinyl sulfone was purchased from Fluorochem. All other chemicals for synthesis were purchased from Sigma Aldrich (Switzerland) and were used without further purification. The following compounds: diphenylphosphine oxide (DPPO) was obtained as described in literature.³¹

### Example 1: Synthesis of Bis-(6-oxido-6H-dibenz[c,e][1,2]oxaphosphorin-6-yl)-sulfone

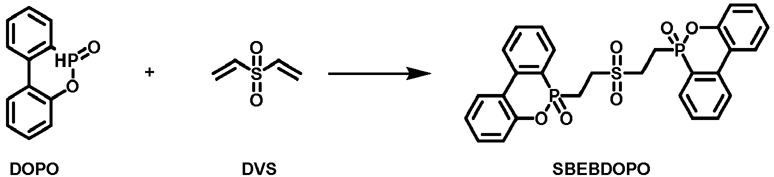

**Table 1 Optimization of reaction conditions for SBEBDOPO (1). Abbreviation: MW = microwave oven**

| Method | Catalyst (mol%) | Solvent | Reaction cond. | Temp. (°C) | Time (hours) | Yield (%) |
|---|---|---|---|---|---|---|
| 1 | ---- | ---- | MW | 130 | 12 | 62 |
| 2 | ---- | toluene | MW | 130 | 0.5 | 41 |
| 3 | ---- | toluene | hot plate | 130 | 16 | 89 |
| 4 | ---- | ---- | hot plate | 130 | 12 | 93 |
| 5 | DBU(10) | ---- | hot plate | 130 | 16 | 89 |

### Method 1

DOPO (5.0 g, 23.12 mmol), divinyl sulfone (1.36 g, 11.56 mmol) were placed in heavy-walled glass vials sealed with aluminum crimp caps fitted with a silicon septum. The glass tube (with an inner diameter of 3 cm and a volume 60 mL) containing the reaction mixtures was sealed with a lid and maintained until the desired temperature (130 °C) was reached (10 minutes). After stirring in the microwave oven for 30 minutes at 130 °C (50 Bar, 1200 W) under N₂ atmosphere, cooling down, the solids were washed with hot ethanol, toluene and dried in vacuum at 80 °C as a white powder with 62% yield.²

**³¹P{¹H}NMR** (CDCl₃): δ 32.95 (s, one diastereomer), 32.93 (s, second diastereomer).

**¹H NMR** (CDCl₃): δ 8.03 - 7.85 (m, 6H, Ar-H), 7.77 (t, 2H, J = 7.8, Ar-H), 7.57 (m, 2H, Ar-H), 7.42 (t, 2H, J = 7.6, Ar-H), 7.30 (t, 2H, J = 7.60, Ar-H), 7.23 (d, 2H, J = 8.0, Ar-H), 3.38 - 3.21 (m, 4H, -CH₂-), 2.55 - 2.42 (m, 4H, -CH2-).

**¹³C{¹H}NMR** (CDCl₃): δ 148.6 (d, J = 8.2, quat), 135.9 (d, J = 6.7, quat), 134.2 (d, J = 2.3, Ar-C), 131.1 (s, Ar-C), 130.1 (d, J = 10.9, Ar-C), 129.0 (d, J = 13.7, Ar-C), 125.4 (s, Ar-C), 125.2 (s, Ar-C), 124.2 (d, J = 9.9, Ar-C), 122.8 (d, J = 124.8, Ar-C), 121.8 (d, J = 11.2, Ar-C), 120.4 (d, J = 6.4, Ar-C), 45.9 (d, J = 2.8, -CH₂-), 21.65 (d, J = 95.5, -CH₂-).

### Method 2

DOPO (5.0 g, 23.12mmol), divinyl sulfone (1.36 g, 11.56 mmol) and toluene (10 ml) were placed in heavy-walled glass vials sealed with aluminum crimp caps fitted with a silicon septum. The glass tube (with an inner diameter of 3 cm and a volume 60 mL) containing the reaction mixtures was sealed with a lid and maintained until the desired temperature (130 °C) was reached (10 minutes). After stirring in the microwave oven for 16h at 130 °C (50 Bar, 1200 W) under N₂ atmosphere, cooling down, the solids were washed with hot ethanol, toluene and dried in vacuum at 80 °C as a white powder with 41% yield.

### Method 3

In a dry 3 neck, round bottom flask connected to the mechanical stirrer, N₂ inlet, thermometer, and a condenser was charged with DOPO (5.0 g, 23.12mmol), Divinyl sulfone (1.36 g, 11.56 mmol) and toluene (5 mL) at room temperature. The mixture was heated at 135 °C for 16 h and cooled at room temperature. Filter crystals and washed them with hot ethanol and dry 80 °C overnight under vacuum to obtain a white powder with 87% yield.

### Method 4

In a dry 3 neck, round bottom flask connected to the mechanical stirrer, N₂ inlet, thermometer, and a condenser was charged with DOPO (5.0 g, 23.12mmol), Divinyl sulfone (1.36 g, 11.56 mmol) at room temperature. The mixture was heated at 130 °C for 16 h and cooled at room temperature. Solid was washed with acetone and toluene and dry 80 °C overnight under vacuum to obtain a white powder with 93% yield.

### Method 5

In a dry 3 neck, round bottom flask connected to the mechanical stirrer, N₂ inlet, thermometer and a condenser was charged with DOPO (5.0 g, 23.12mmol), Divinyl sulfone (1.36 g, 11.56 mmol), DBU (176 mg, 1.15 mmol) and toluene (30 mL) at room temperature. The mixture was heated at 130 °C for 16 h and cooled at room temperature. Solid was washed with acetone and toluene and dry 80 °C overnight under vacuum to obtain a white powder with 89% yield.

### Large-scale reaction (repetition of Method 3)

In a dry 3 neck, round bottom flask connected to the mechanical stirrer, N₂ inlet, thermometer, and a condenser was charged with DOPO (187.38 g, 867.5 mmol), divinyl sulfone (50 g, 423.2 mmol) and Toluene (600 mL) at room temperature. The mixture was heated at 135 °C for 24 hours and cooled at room temperature. Filter crystals and washed them with acetone and dry 85 °C overnight under vacuum to obtain a white powder with 85% yield.

### Example 2: Sulfonyl bis(ethane-2,1-diyl)) bis(diphenylphosphine oxide)

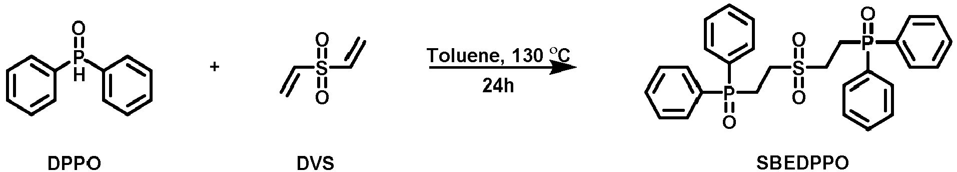

In a dry 3 neck, round bottom flask connected to the mechanical stirrer, N₂ inlet, thermometer, and a condenser was charged with diphenylphosphine oxide (82.89 g, 410 mmol), Divinyl sulfone (23.63 g, 200 mmol) and Toluene (500mL) at room temperature. The mixture was heated at 130 °C for 24 hours and cooled at room temperature. Filter crystals and washed them with acetone and dry 70 °C overnight under vacuum to obtain a white powder with (187g) 87% yield.

**³¹P {¹H}NMR** (CDCl₃): δ 29.80 (s).

**¹H NMR** (CDCl₃): δ 7.79 - 7.65 (m, 8H, Ar-H), 7.57 - 7.45 (m, 12H, Ar-H), 3.19 (m, 4H, -CH₂- ), 2.72 (m, 4H, -CH₂-).

**¹³C {¹H}NMR** (CDCl₃): δ 132.5 (d, J = 2.7, Ar-C), 130.9 (d, J = 101.9, Ar-C), 130.6 (d, J = 9.6, Ar-C), 129.0 (d, J = 12.0, Ar-C), 45.9 (s, -CH₂-), 22.2 (d, J = 68.4, -CH₂).

### Example 3: Tetraphenyl (sulfonyl bis(ethane-2,1-diyl)) bis(phosphonate)

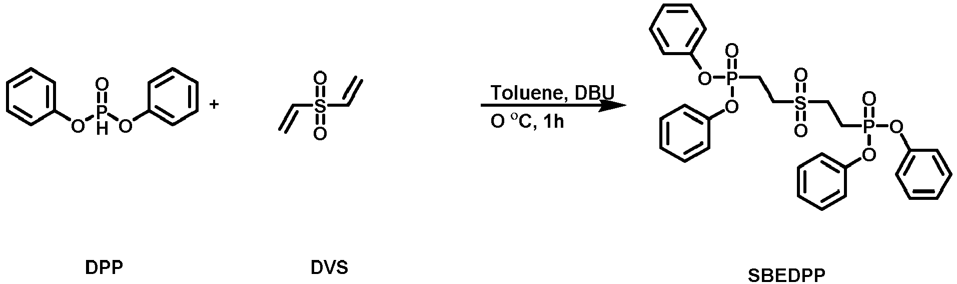

In a dry 3 necks, round bottom flask connected to the mechanical stirrer, N2 inlet, thermometer, and a condenser was charged with diphenyl phosphonate (203.16 g, 867.5 mmol), Divinyl sulfone (50 g, 423.5 mmol) and Toluene (1L) at room temperature. The mixture was cooled at 0 °C, DBU (12.88g, 84.6 mmol) was added dropwise. After finishing DBU stir 30 minutes at 0 °C .Filter crystals and washed them with methanol, dry 60 °C under vacuum overnight to afford 221 g (89%) desired product.

**³¹P {¹H}NMR** (CDCl₃): δ 19.24 (s).

**¹H NMR** (CDCl₃): δ 7.38 - 7.34 (m, 8H, Ar-H), 7.24 - 7.18 (m, 12H, Ar-H), 3.50-3.43 (m, 4H, - CH₂-), 2.69-2.60 (m, 4H, -CH₂-).

**¹³C {¹H}NMR** (CDCl₃): δ 149.84 (d, J = 9, Ar-C), 130.07 (Ar-C), 125.78 (Ar-C), 120.40 (d, J = 5, Ar-C), 46.78 (d, J = 3, -CH2-), 19.51 (d, J = 45, -CH2-).

### Example 4: Tetramethyl (sulfonyl bis(ethane-2,1-diyl))bis(phosphonate)

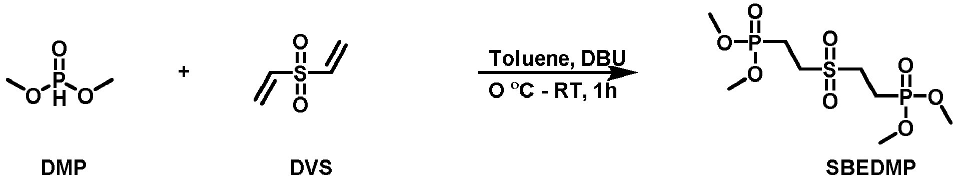

In dry 3 necks, round bottom flask connected to the mechanical stirrer, N₂ inlet, thermometer, and a condenser was charged with Dimethyl phosphite (95.45 g, 867.5 mmol), Divinyl sulfone (50 g, 423.5 mmol) and Toluene (500 ml) at room temperature. The mixture was cooled at 0 °C, DBU (12.88g, 84.6 mmol) was added dropwise for 30 mints. The resulting mixture was then allowed to warm up to room temperature and left stirring for 1 h. After completing the reaction toluene was evaporated by a rotary evaporator, heptane was added (500 ml) in the reaction mixture and after 5 mints stirring crystals were filtered, washed with heptane. Crystals were derived under vacuum 50 °C overnight yields 131 g (91%) product.

**³¹P {¹H}NMR** (CDCl₃): δ 28.83 (s).

**¹H NMR** (CDCl₃): δ 3.81- 3.79 (d, 12H, -OCH₃), 3.27 - 3.21 (m, 4H, -CH2-).), 2.32 - 2.23 (m, 4H, -CH2-).

**¹³C {¹H}NMR** (CDCl₃): δ 53.02 (-OCH₃), 46.71 (s, -CH₂-), 18.19 (d, J = 68.4 -CH₂-).

### 2. Alkyl phosphine oxide bridged phosphorus compounds

Alkyl phosphine oxide bridged phosphorus compound obtainable by the addition reaction of a suitable P(O)-H compound to divinyl phenyl phosphine oxide or methyldivnylphosphine oxide have been studied and found to be suitable as flame retardant additives due to their high thermal stability. Two alkyl phosphine oxide bridged phosphorus compounds (5 and 6) were synthesized. Synthesis of compound **6**³² and some application known³³ is already known in the literature but their application as flame retardants are not known. Moreover, the compound 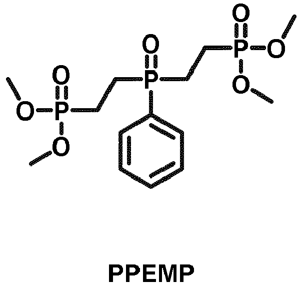 is already known in the literature³⁴, but its application as flame retardant is not known. Although some methods for the preparation of alkyl phosphine oxide bridged phosphorus compounds³⁵ are known, but these methods are not feasible for industrial upscaling. We have optimized the synthesis of compound 6 for potential industrial scale up.

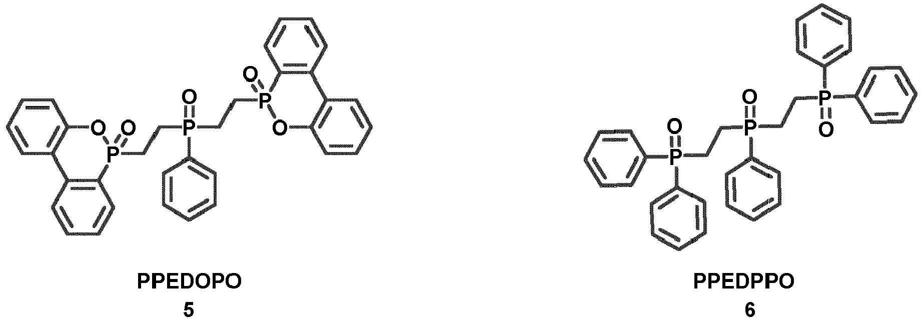

### Examples of phosphine oxide bridged phosphorus compounds

### Example 5: Synthesis of (phenylphosphoryl)bis(ethane-2,1-diyl))bis(diphenyl-phosphine oxide) (PPEDPPO)

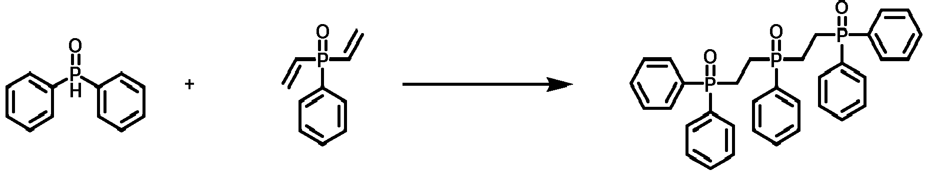

**Table 2 Optimization of the addition of P(O)-H bonds to DVPPO; Abbreviation: MW = microwave oven**

| Entry | Reaction cond. | Solvent | Catalyst | temp.°C | Time | Yield (%)^{a} |
|---|---|---|---|---|---|---|
| 1 | MW | ------- | ------- | 130 | 1h | 96 |
| 2 | MW | ------- | ------- | 150 | 1h | 27 |
| 3 | hot plate | ------- | ------- | 130 | 2h | 44 |
| 4 | hot plate | Toluene | ------- | 130 | 1h | 79 |
| 5 | hotplate | Toluene | DBU | 130 | 1h | 81 |

| | | | | | | |
|---|---|---|---|---|---|---|
| **a) isloted yields** | | | | | | |

### Method 1

Diphenylphosphine oxide (DPPO) (2.02 g, 10 mmol), phenyldivinylphosphine oxide (DVPPO) (0.89 g, 5 mmol) were placed in heavy-walled glass vials sealed with aluminum crimp caps fitted with a silicon septum. The glass tube (with an inner diameter of 3 cm and a volume 60 mL) containing the reaction mixtures was sealed with a lid and maintained until the desired temperature (130 °C) was reached (10 minutes). After stirring in the microwave oven for 60 minutes at 130 °C (50 Bar, 1200 W) under N₂ atmosphere, cooling down, the solids were washed with hot ethanol, toluene and dried in vacuum at 80 °C as a white powder with 96% yield.

**³¹P {¹H}NMR** (CDCl₃): δ 32.3 (d), 41.3 (t).

**¹H NMR** (CDCl₃): δ 7.69 - 7.26 (m, 25H, Ar-H), 2.56-2.07 - 7.26 (m, 8H, -CH₂-),

**¹³C {¹H}NMR** (CDCl₃): δ 132.4 (d, Ar-C) 132.2 (Ar-C), 132.2(t, Ar-C), 132.1(d, Ar-C), 131.3(ArC), 131.12(Ar-C), 130.9(Ar-C), 130.7(Ar-C), 130.7(Ar-C), 130.6(Ar-C), 130.1(Ar-C), 129.2(ArC), 129.0(Ar-C), 128.9(Ar-C), 128.8(Ar-C), 128.8(Ar-C), 128.7(Ar-C), 22.1 (d, -CH₂-), 22.0 (d, -CH₂-), 21.6(d, -CH₂-), 21.3(d, -CH₂-).

### Method 2

Diphenylphosphine oxide (DPPO) (2.02 g, 10 mmol), phenyldivinylphosphine oxide (DVPPO) (0.89 g, 5 mmol) were placed in heavy-walled glass vials sealed with aluminum crimp caps fitted with a silicon septum. The glass tube (with an inner diameter of 3 cm and a volume 60 mL) containing the reaction mixtures was sealed with a lid and maintained until the desired temperature (150 °C) was reached (15 minutes). After stirring in the microwave oven for 60 minutes at 150 °C (50 Bar, 1200 W) under N₂ atmosphere, cooling down, the solids were washed with hot ethanol, toluene and dried in vacuum at 80 °C as a white powder with 27% yield.

### Method 3

In a dry 3 neck, round bottom flask connected to the mechanical stirrer, N₂ inlet, thermometer, and a condenser was charged with Diphenylphosphine oxide (DPPO) (2.02 g, 10 mmol) and phenyldivinylphosphine oxide (DVPPO) (0.89 g, 5 mmol) at room temperature. The mixture was heated at 130 °C for 2 h and cooled at room temperature. Crystals were washed with hot ethanol and dry 80 °C overnight under vacuum to obtain a white powder with 44% yield.

### Method 4

In a dry 3 neck, round bottom flask connected to the mechanical stirrer, N₂ inlet, thermometer, and a condenser was charged with Diphenylphosphine oxide (DPPO) (2.02 g, 10 mmol), phenyldivinylphosphine oxide (DVPPO) (0.89 g, 5 mmol) and toluene (5 mL) at room temperature. The mixture was heated at 130 °C for 2 h and cooled at room temperature. Filter crystals and washed them with hot ethanol and dry 80 °C overnight under vacuum to obtain a white powder with 79% yield.

### Method 5

In a dry 3 neck, round bottom flask connected to the mechanical stirrer, N₂ inlet, thermometer, and a condenser was charged with Diphenylphosphine oxide (DPPO) (2.02 g, 10 mmol), phenyldivinylphosphine oxide (DVPPO) (0.89 g, 5 mmol), toluene (5 mL) and DBU (76.12 mg, 0.50 mmol, 10 mol%) at room temperature. The mixture was heated at 130 °C for 2 h and cooled at room temperature. Solid was washed with acetone and toluene and dried at 80 °C overnight under vacuum to obtain a white powder with 81% yield.

### Example 6: Synthesis of 6,6'-((phenylphosphoryl)bis(ethane-2,1-diyl))bis-(dibenzo[c,e][1,2]oxaphosphinine 6-oxide) (PPEDOPO)

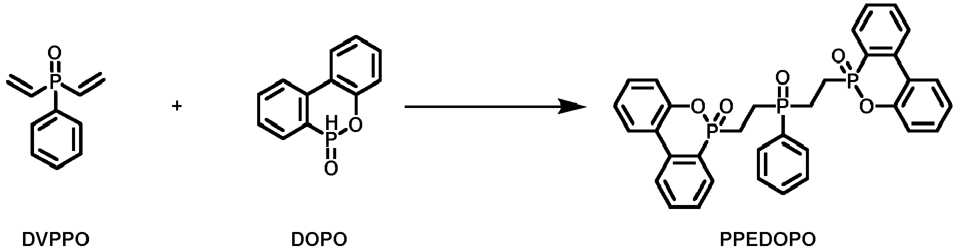

### Method 1

DOPO (2.16 g, 10 mmol), phenyldivinylphosphine oxide (DVPPO) (0.89 g, 5 mmol) and toluene (5ml) were placed in heavy-walled glass vials sealed with aluminum crimp caps fitted with a silicon septum. The glass tube (with an inner diameter of 3 cm and a volume 60 mL) containing the reaction mixtures was sealed with a lid and maintained until the desired temperature (130 °C) was reached (10 minutes). After stirring in the microwave oven for 60 minutes at 130 °C (50 Bar, 1200 W) under N₂ atmosphere, cooling down, the solids were washed with hot ethanol, toluene and dried in vacuum at 80 °C as a white powder with 91% yield.

**³¹P {¹H}NMR** (CDCl₃): δ 40.0 (m), 36.3 (m).

**¹H NMR** (CDCl₃): δ 7.97 - 7.94 (m, 2H, Ar-H), 7.91 - 7.88 (m, 2H, Ar-H), 7.82 - 7.68 (m, 4H, Ar-H), 7.58 - 7.48 (m, 7H, Ar-H), 7.41 - 7.34 (m, 7H, Ar-H), 7.25 - 7.14 (m, 4H, Ar-H), 2.92 - 1.88 (m, 8H, -CH₂-).

**¹³C {¹H}NMR** (CDCl₃): δ 148.9 (d, Ar-C), 135.9 (Ar-C), 133.7 (d, Ar-C), 132.6 (d, Ar-C), 130.9 (d, Ar-C), 130.6 (q, Ar-C), 130.2 (t, Ar-C) 19.6 (Ar-C), 129.3 (Ar-C), 129.1 (Ar-C), 128.7 (d, Ar-C), 125.3 (d, Ar-C), 124.9 (d, Ar-C), 124.2 (t, Ar-C), 122.8 (Ar-C), 122.0 (Ar-C), 22.4 (d, -CH₂-), 21.7 (d, -CH₂-), 21.1 (d, -CH₂-), 20.1 (d, -CH₂-).

### Method 2

In a dry 3 neck, round bottom flask connected to the mechanical stirrer, N₂ inlet, thermometer, and a condenser was charged with DOPO (2.16 g, 10 mmol), phenyldivinylphosphine oxide (DVPPO) (0.89 g, 5 mmol) and toluene (5 mL) at room temperature. The mixture was heated at 130 °C for 16 h and cooled at room temperature. Filter crystals and washed them with hot ethanol and dry 80 °C overnight under vacuum to obtain a white powder with 72% yield.

### Method 3

In a dry 3 neck, round bottom flask connected to the mechanical stirrer, N₂ inlet, thermometer, and a condenser was charged with DOPO (2.16 g, 10 mmol), phenyldivinylphosphine oxide (DVPPO) (0.89 g, 5 mmol), toluene (5 mL) and DBU (76.12 mg, 0.50 mmol, 10 mol%) at room temperature. The mixture was heated at 130 °C for 16 h and cooled at room temperature. Solid was washed with acetone and toluene and dry 80 °C overnight under vacuum to obtain a white powder with 27% yield.

### Application Examples

### Melt Processing of Polypropylene (PP) and FR Formulations

Polypropylene (PP) and the FR additives were dried overnight before processing in a vacuum oven at 80 °C. Both polymer (PP) and FR pre-formulations were prepared via mechanical blending of the polymer balls and the additive powder in a theoretical mass to the ratio of 95, 90, 85 wt. % polymer (PP): 5, 10, 15 wt. % FR. The compounding was performed under the following conditions: screw speed of 85 rpm, the output of 0.8 kg/h, in a temperature range of 240-250 °C. The weight percentages of the FRs were calculated based on the P-content measurements. The extruded threads were cooled in air, pelletized, and dried at 80 °C for 15 h under vacuum. A part of the prepared pellets was used to perform thermogravimetric analysis (TGA), Differential scanning calorimetry (DSC) and pyrolysis combustion flow calorimetry (PCFC). Using an injection molding machine Battenfeld Plus 350/75 (Battenfeld Technologies, Columbia, MO, USA), with the temperature profile of the zones between 200 and 210 °C, molded PP formulation plates (125 mm x 13 mm x 1 mm) were obtained and used for vertical burning tests.

### Analytical Characterization

The structure of all synthesized compounds was characterized by ¹H, ³¹P, d ¹³C NMR recorded on a Bruker Avance 400 NMR spectrometer (Bruker, Coventry, UK), in CDCl₃ at 298 K. The phosphorus content of the formulations was estimated using the inductively-coupled plasma optical emission spectrometry method (ICP-OES), on a Perkin Elmer Optima 3000 apparatus (Perkin Elmer Inc., Wellesley, UK). Sample preparation for ICP-OES consists of mixing 300 mg of PP formulation with 1 mL H₂O₂ and 3 mL HNO₃, followed by etching in the microwave. The measurements of P-content and TGA were repeated two times; the PCFC investigations were repeated three times, while the measurements for mechanical properties were the average of five specimens for each formulation. The average values were reported and the error was evaluated as a standard deviation between measurements.

**Table 3. BKZ-VBa Test PP/SBEBDOPO along with LOI values.**

| **BKZ-VBa Test** | | | | | |
|---|---|---|---|---|---|
| **Sample** | **Flame contact time** | **Time after flame** | **Burning height** | **Melt Drips** | **LOI[%]** |
| **PP-Blank** | 15 s | 40 s | 15 cm | Many | 20.9 |
| **PP-5%** SBEBDOPO | 15 s | 7.6 | 7.7 cm | Few | 23.3 |
| **PP-10%** SBEBDOPO | 15 s | 0 s | 6.0 cm | No | 24.3 |
| **PP-15%** SBEBDOPO | 15 s | 0 s | 3.7 cm | No | 25.7 |

**Table 4. FPUF burning test along with LOI values.**

| **type of flame retardant** | **FR Conc. on the basis of phosphorus** | **Limiting oxygen index, LOI (O₂ %)** | **PASS/ NO** | **UL94-HB** |
|---|---|---|---|---|
| **NONE** | virgin FPUF | 19.87 | NO | HBF |
| SBEBDOPO | 1 % | 20.23 | NO | HBF |
| SBEBDOPO | 2% | 20.93 | PASS | HF1 |
| SBEDMP | 1 % | 20.20 | NO | HBF |
| SBEDMP | 2% | 22.13 | PASS | HF1 |
| SBEDPPO | 1 % | 20.47 | PASS | HF1 |
| SBEDPPO | 2% | 20.80 | PASS | HF1 |
| SBEDMP | 1 % | 21.60 | PASS | HF1 |

### Processing of PPEDOPO and preliminary fire results:

Virgin PA6 previously dried in a vacuum oven at 100° C for 12 hours was melt-blended with 10 wt.% PPEDOPO for five minutes. The melt blending was performed using DSM Xplore micro compounder (MC 15 HT) at 260°C and 100 rpm. The processed PA6 were then extruded as 2 mm strands. Such strands were then exposed to 2 cm Bunsen burner flame at 45° and the PA6/PPEDOPO strands were self-extinguishing. Virgin PA 6 strands burned completely in such experiments.

### References for section "Detailed description of the invention"

1. Hirai, T.; Han, L.-B., Air-Induced anti-Markovnikov Addition of Secondary Phosphine Oxides and H-Phosphinates to Alkenes. Organic Letters 2007, 9 (1), 53-55.
2. Stockland, R. A.; Taylor, R. I.; Thompson, L. E.; Patel, P. B., Microwave-Assisted Regioselective Addition of P(O)-H Bonds to Alkenes without Added Solvent or Catalyst. Organic Letters 2005, 7 (5), 851-853.
3. Gruetzmacher, H.; Mueller, G. A process for the preparation of acylphosphanes. US20150299231A1, 2015.
4. Grutzmacher, H.; Muller, G. A process for the preparation of acylphosphanes. WO2014053455A1, 2014.
5. Stockland, R. A., Jr.; Taylor, R. I.; Thompson, L. E.; Patel, P. B., Microwave-Assisted Regioselective Addition of P(O)-H Bonds to Alkenes without Added Solvent or Catalyst. Org. Lett. 2005, 7 (5), 851-853.
6. Gusarova, N. K.; Malysheva, S. F.; Chernysheva, N. A.; Belogorlova, N. A.; Arbuzova, S. N.; Khil'ko, M. Y.; Trofimov, B. A., Reaction of secondary phosphines and phosphine oxides with divinyl sulfone. Russ. J. Org. Chem. 1998, 34 (7), 1056-1057.
7. Malysheva, S. F.; Gusarova, N. K.; Belogorlova, N. A.; Afonin, A. V.; Arbuzova, S. N.; Trofimov, B. A., A new method for the synthesis of diorganylvinylphosphine oxides. Russ. Chem. Bull. 1997, 46 (10), 1799-1801.
8. Duersch, W.; Linke, F.; Beermann, C.; Nischwitz, E. Phosphorus compounds containing carbamate groups and their use as flame-protective additives. DE2249321A1, 1974.
9. Pudovik, A. N.; Sitdykova, F. N., Addition of organophosphorus compounds with active hydrogen to divinyl sulfone and p-bis(β-nitrovinyl)benzene. Zh. Obshch. Khim. 1964, 34 (5), 1682-3.
10. Protopopov, I. S.; Kraft, M. Y., Reaction of phenol ethers with phosphorus trichloride. II. The reaction of dimethyl resorcinol ether with phosphorus trichloride. Zh. Obshch. Khim. 1964, 34 (5), 1446-9.
11. López Gaxiola, D.; Jubinski, M. M.; Keith, J. M.; King, J. A.; Miskioglu, I., Effects of carbon fillers on tensile and flexural properties in polypropylene-based resins. Journal of Applied Polymer Science 2010, 118 (3), 1620-1633.
12. Jin, J.; Wang, H.; Shu, Z.; Lu, L., Impact of selective dispersion of intumescent flame retardant on properties of polypropylene blends. Journal of Materials Science 2017, 52 (6), 3269-3280.
13. Ayrilmis, N.; Kaymakci, A.; Ozdemir, F., Sunflower seed cake as reinforcing filler in thermoplastic composites. Journal of Applied Polymer Science 2013, 129 (3), 1170-1178.
14. Shi, Y.; Qian, X.; Zhou, K.; Tang, Q.; Jiang, S.; Wang, B.; Wang, B.; Yu, B.; Hu, Y.; Yuen, R. K. K., CuO/Graphene Nanohybrids: Preparation and Enhancement on Thermal Stability and Smoke Suppression of Polypropylene. Industrial & Engineering Chemistry Research 2013, 52 (38), 13654-13660.
15. Nie, S.; Song, L.; Bao, C.; Qian, X.; Guo, Y.; Hong, N.; Hu, Y., Synergistic effects of ferric pyrophosphate (FePP) in intumescent flame-retardant polypropylene. Polymers for Advanced Technologies 2011, 22 (6), 870-876.
16. Li, B.; Xu, M., Effect of a novel charring-foaming agent on flame retardancy and thermal degradation of intumescent flame retardant polypropylene. Polymer Degradation and Stability 2006, 91 (6), 1380-1386.
17. Zhang, S.; Horrocks, A. R., A review of flame retardant polypropylene fibres. Progress in Polymer Science 2003, 28 (11), 1517-1538.
18. Lu, S.-Y.; Hamerton, I., Recent developments in the chemistry of halogen-free flame retardant polymers. Progress in Polymer Science 2002, 27 (8), 1661-1712.
19. Camino, G.; Maffezzoli, A.; Braglia, M.; De Lazzaro, M.; Zammarano, M., Effect of hydroxides and hydroxycarbonate structure on fire retardant effectiveness and mechanical properties in ethylene-vinyl acetate copolymer. Polymer Degradation and Stability 2001, 74 (3), 457-464.
20. Qiu, L.; Xie, R.; Ding, P.; Qu, B., Preparation and characterization of Mg(OH)2 nanoparticles and flame-retardant property of its nanocomposites with EVA. Composite Structures 2003, 62 (3), 391-395.
21. Gao, Y.; Wu, J.; Wang, Q.; Wilkie, C. A.; O'Hare, D., Flame retardant polymer/layered double hydroxide nanocomposites. Journal of Materials Chemistry A 2014, 2 (29), 10996-11016.
22. Rothon, R. N.; Hornsby, P. R., Flame retardant effects of magnesium hydroxide. Polymer Degradation and Stability 1996, 54 (2), 383-385.
23. Haurie, L.; Fernández, A. I.; Velasco, J. I.; Chimenos, J. M.; Lopez Cuesta, J.-M.; Espiell, F., Synthetic hydromagnesite as flame retardant. Evaluation of the flame behaviour in a polyethylene matrix. Polymer Degradation and Stability 2006, 91 (5), 989-994.
24. Levchik, S. V.; Weil, E. D., Thermal decomposition, combustion and fire-retardancy of polyurethanes-a review of the recent literature. Polymer International 2004, 53 (11), 1585-1610.
25. Feng, F.; Qian, L., The flame retardant behaviors and synergistic effect of expandable graphite and dimethyl methylphosphonate in rigid polyurethane foams. Polymer Composites 2014, 35 (2), 301-309.
26. Ciecierska, E.; Jurczyk-Kowalska, M.; Bazarnik, P.; Kowalski, M.; Krauze, S.; Lewandowska, M., The influence of carbon fillers on the thermal properties of polyurethane foam. Journal of Thermal Analysis and Calorimetry 2016, 123 (1), 283-291.
27. Yang, R.; Hu, W.; Xu, L.; Song, Y.; Li, J., Synthesis, mechanical properties and fire behaviors of rigid polyurethane foam with a reactive flame retardant containing phosphazene and phosphate. Polymer Degradation and Stability 2015, 122, 102-109.
28. Liu, X.; Hao, J.; Gaan, S., Recent studies on the decomposition and strategies of smoke and toxicity suppression for polyurethane based materials. RSC Advances 2016, 6 (78), 74742-74756.
29. Jiao, L.; Xiao, H.; Wang, Q.; Sun, J., Thermal degradation characteristics of rigid polyurethane foam and the volatile products analysis with TG-FTIR-MS. Polymer Degradation and Stability 2013, 98 (12), 2687-2696.
30. Zatorski, W.; Brzozowski, Z. K.; Kolbrecki, A., New developments in chemical modification of fire-safe rigid polyurethane foams. Polymer Degradation and Stability 2008, 93 (11), 2071-2076.
31. Kosei, S.; Akio, M.; Masahiko, T.; Yoshimitsu, K.; Toshiyuki, S.; Yoshinobu, Y.; Kentaro, O., Cycloadditions of 3,4-Dihydro-2H-pyrrole N-Oxide with Thioketones and a Selenoketone. Bulletin of the Chemical Society of Japan 2007, 80 (4), 743-746.
32. P. Kathirgamanathan, L. M. Bushby, R. D. Price (Elam-T Limited, UK.) *Published patent application* WO2003014256A1, 2003**.**
33. a) A. N. Turanov, V. K. Karandashev, V. V. Ragulin, Radiochemistry (N. Y., NY, U. S.) 2005, 47, 278; b) A. N. Turanov, V. K. Karandashev, N. A. Bondarenko, Radiochemistry (N. Y., NY, U. S.) 2005, 47, 74; c) V. Grushin, N. Herron, V. A. Petrov, N. S. Radu, Y. Wang (E. I. Du Pont De Nemours and Company, USA .) *Published patent application* US20030144487A1, 2003**;** d) F. Arnaud-Neu, J. K. Browne, D. Byrne, D. J. Marrs, M. A. McKervey, P. O'Hagan, M. J. Schwing-Weill, A. Walker, Chem. - Eur. J. 1999, 5, 175; e) P. A. W. Dean, D. D. Phillips, L. Polensek, Can. J. Chem. 1981, 59, 50; f) K. Moedritzer, Thermochim. Acta 1976, 16, 173; g) R. B. King, P. R. Heckley, Phosphorus 1974, 3, 209.
34. Y. Saga, D. Han, S.-i. Kawaguchi, A. Ogawa, L.-B. Han, Tetrahedron Letters 2015, 56, 5303.
35. a) W. Boyer, P.; Roger, M, J. U.S. 2,634,288, January 10, 1953; b) p.-. M.K. Gennady J. Chem. Soc. (1955); c) L. C. Baldwin, M. J. Fink, Journal of Organometallic Chemistry 2002, 646, 230; d) L. L. Khemchyan, J. V. Ivanova, S. S. Zalesskiy, V. P. Ananikov, I. P. Beletskaya, Z. A. Starikova, Advanced Synthesis & Catalysis 2014, 356, 771; e) L.-B. Han, C.-Q. Zhao, The Journal of Organic Chemistry 2005, 70, 10121; f) M. A. Pudovik, S. A. Terent'eva, L. K. Kibardina, A. N. Pudovik, Russian Journal of General Chemistry 2006, 76, 714; g) I. G. Trostyanskaya, I. P. Beletskaya, Tetrahedron 2014, 70, 2556; h) G. Nan, H. Yue, Tetrahedron Letters 2018, 59, 2071; i) A. Yoshimura, Y. Saga, Y. Sato, A. Ogawa, T. Chen, L.-B. Han, Tetrahedron Letters 2016, 57, 3382; j) T.-Z. Huang, T. Chen, Y. Saga, L.-B. Han, Tetrahedron 2017, 73, 7085.

## Claims

1. A bridged phosphorus compound, comprising an alkyl sulfone bridge or an alkyl phosphine oxide bridge, the compound being selected from the group consisting of: 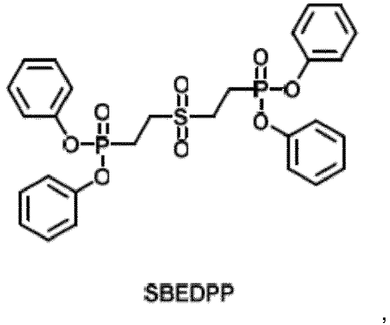 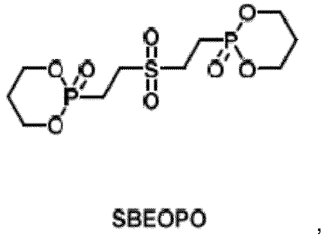 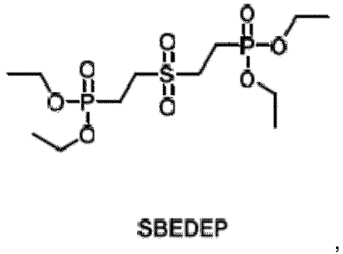 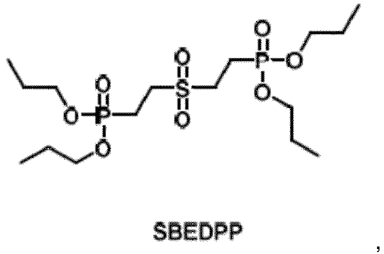 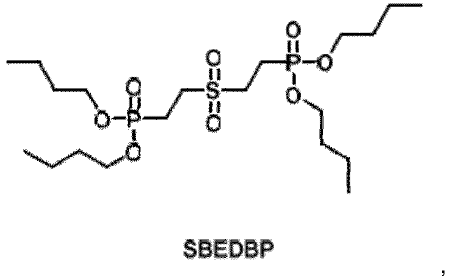 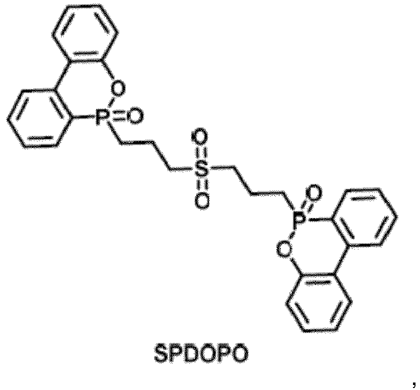 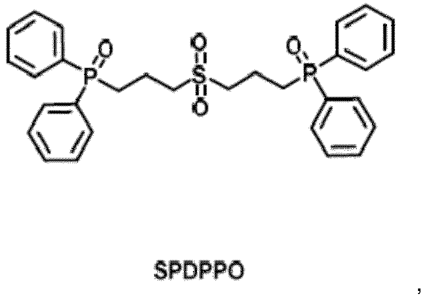 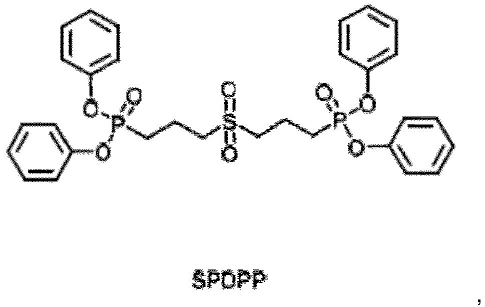 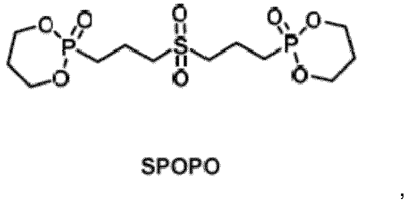 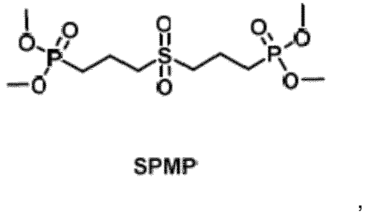 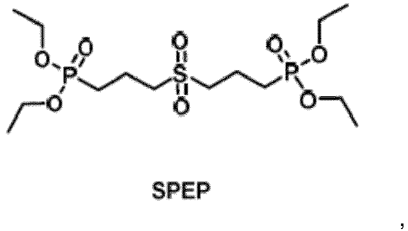 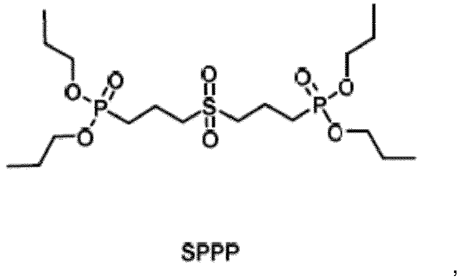 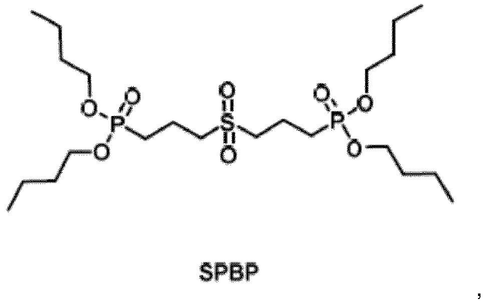 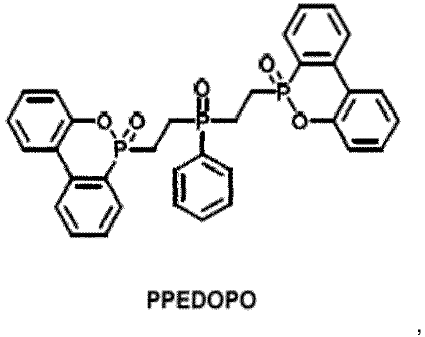 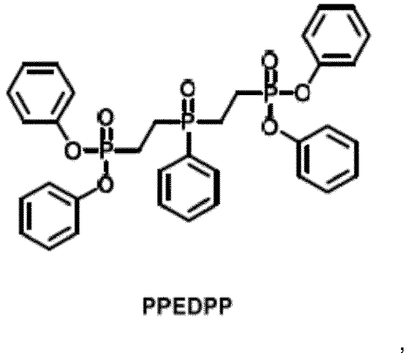 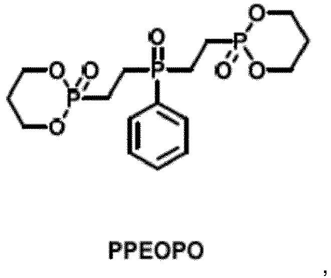 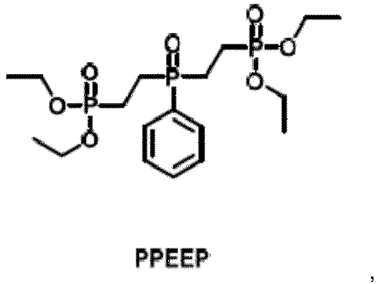 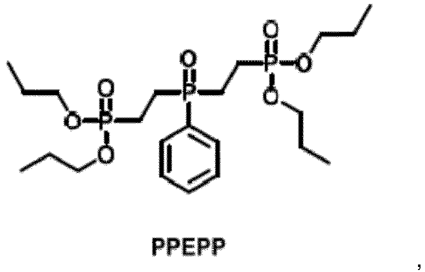 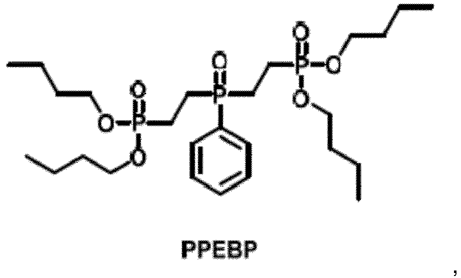 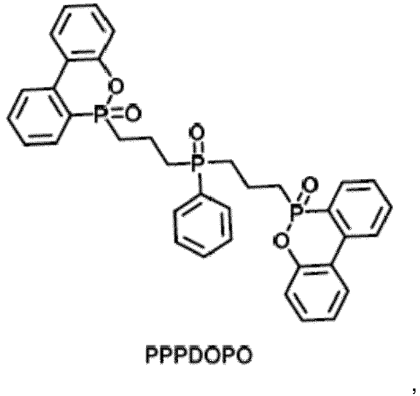 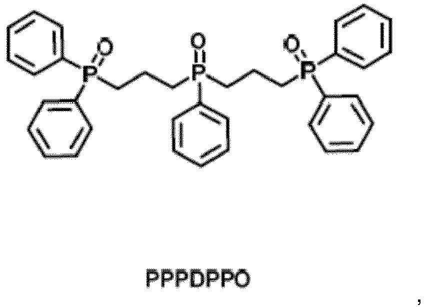 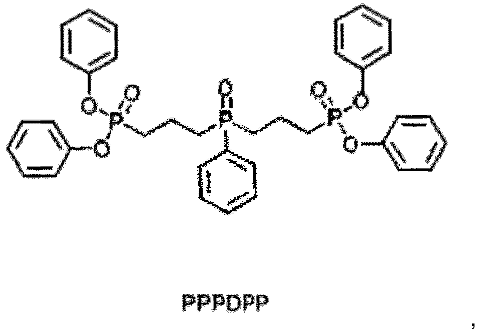 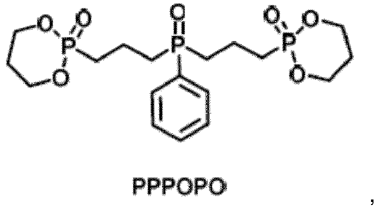 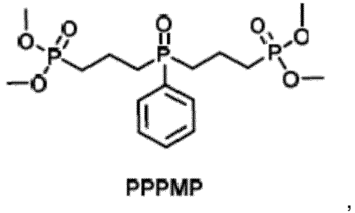 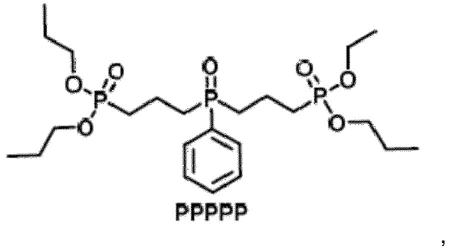 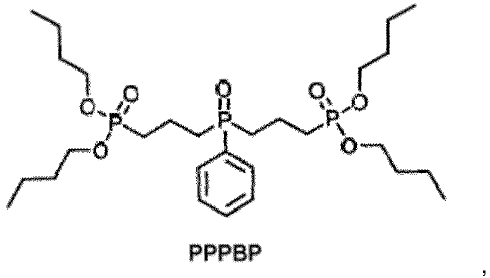 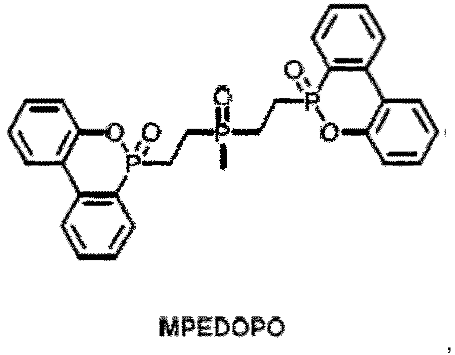 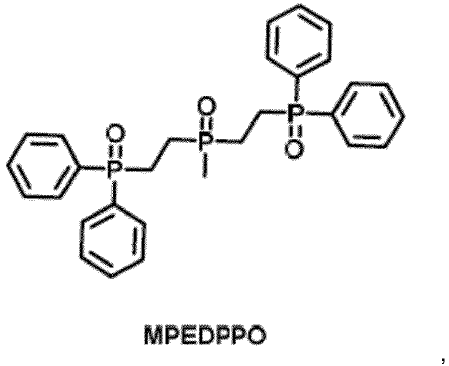 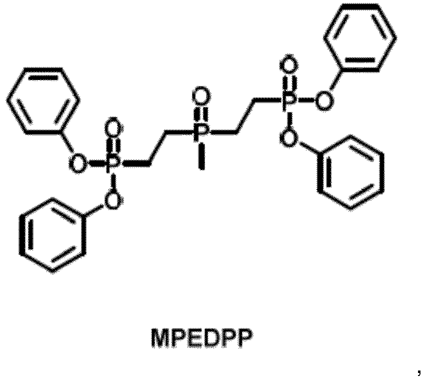 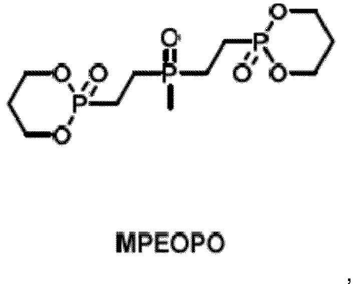 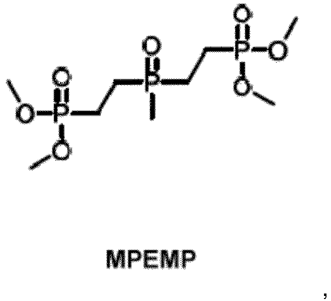 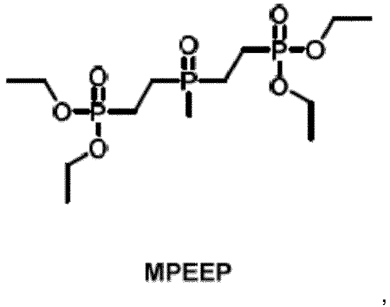 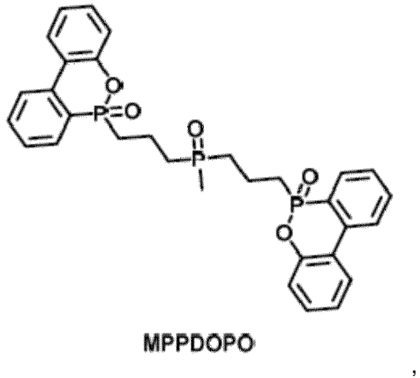 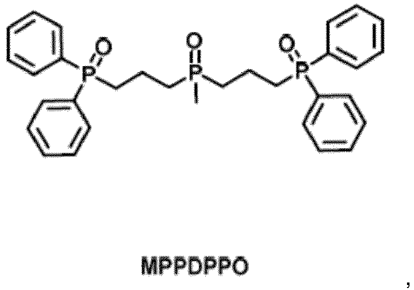 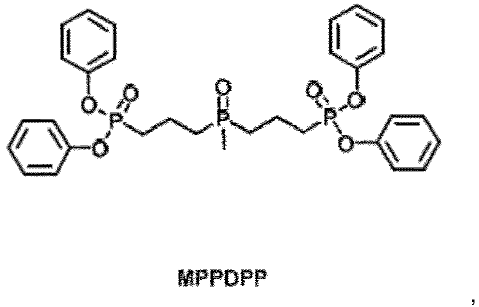 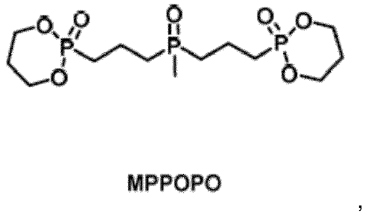 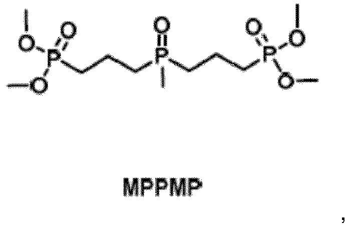 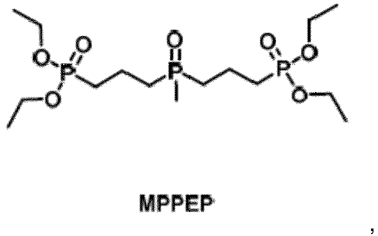 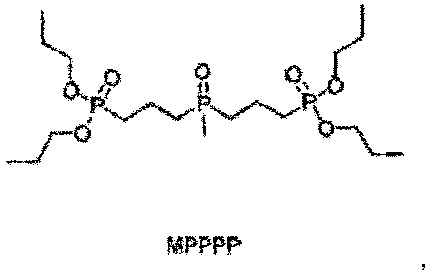 and

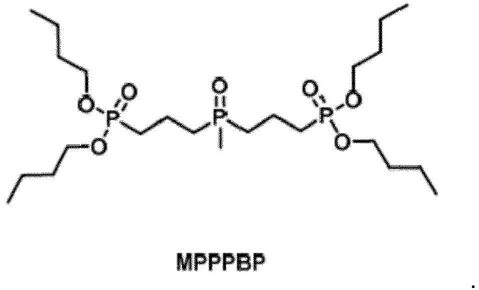

2. Use of a bridged phosphorus compound with the general formula (I) 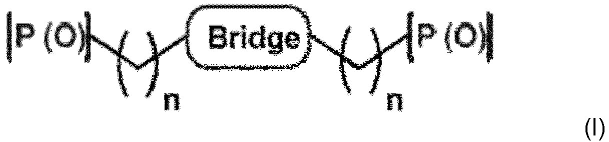 wherein n is 2 or 3, and wherein 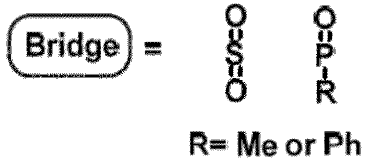 and wherein [**P(O)**]**-H** is selected from the group consisting of: 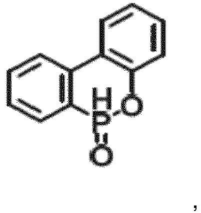 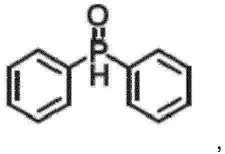 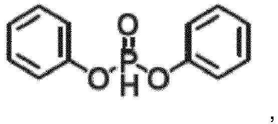 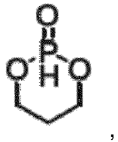 and 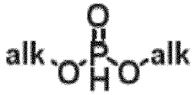 with alk = CH₃, C₂H₅, C₃H₇, or C₄H₉,
as a flame-retardant substance.

3. The use according to claim 2, wherein the bridged phosphorus compound is selected from the following group: 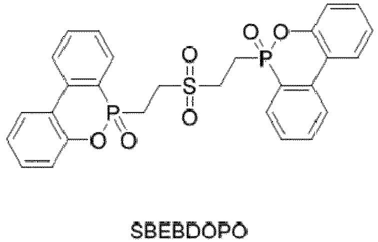 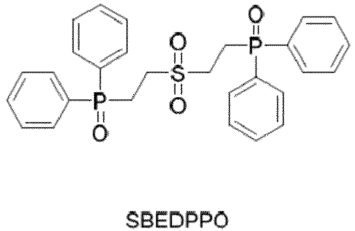 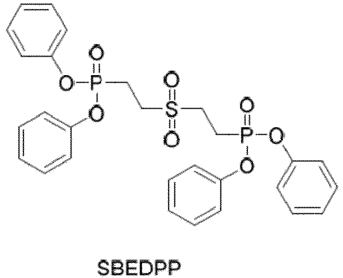 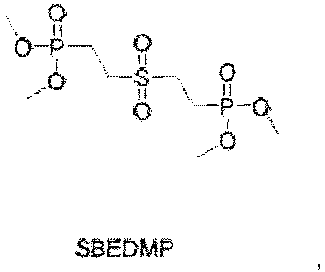 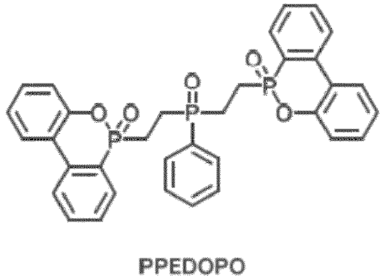 and

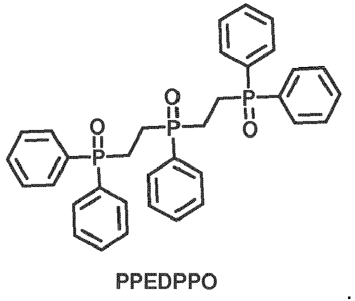

4. The use according to claim 2 or 3, wherein the bridged phosphorus compound is admixed in a polymeric material.

5. The use according to claim 4, wherein the polymeric material is polypropylene.

6. The use according to claim 4, wherein the polymeric material is a flexible polyurethane foam.

7. A polymeric material with improved flame resistance, comprising a bridged phosphorus compound with the general formula (I) 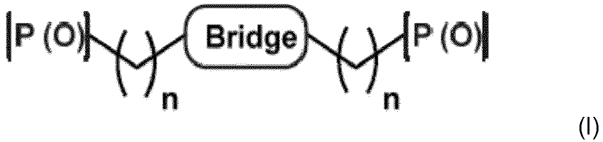 wherein n is 2 or 3, and wherein 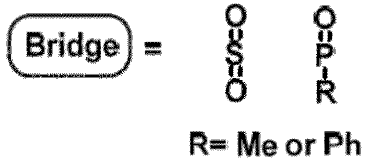 and wherein [**P(O)**]**-H** is selected from the group consisting of: 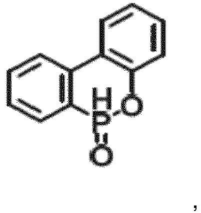 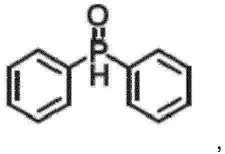 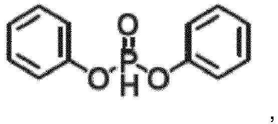 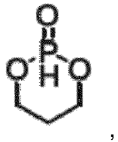 and 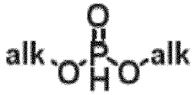 with alk = CH₃, C₂H₅, C₃H₇, or C₄H₉,
admixed in a melt processable polymer.

8. The polymeric material according to claim 7, wherein the bridged phosphorus compound is selected from the following group: 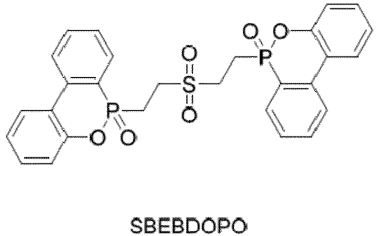 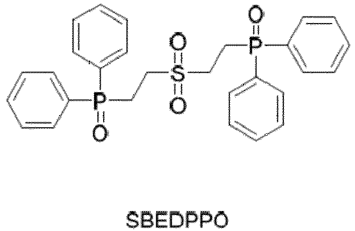 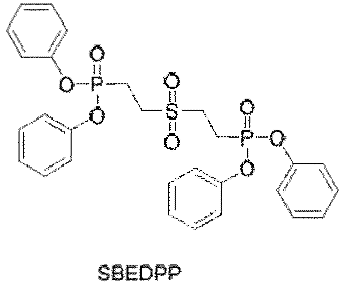 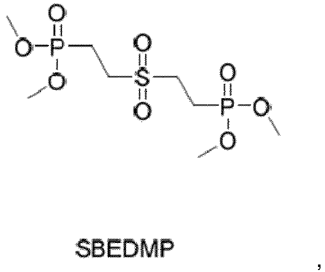 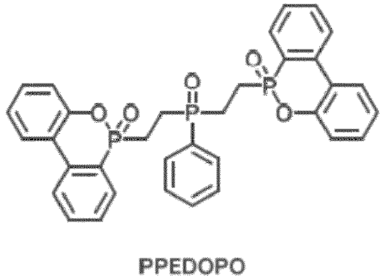 and

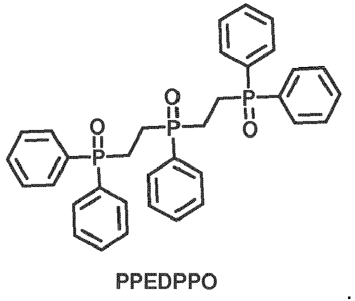

9. The polymeric material according to claim 7 or 8, wherein the polymeric material is polypropylene and the bridged phosphorus compound is present in an amount of 2 to 20%, preferably about 5 to 15% by weight.

10. The polymeric material according to claim 7 or 8, wherein the polymeric material is a flexible polyurethane foam and the bridged phosphorus compound is present in an amount of 0.5 to 5%, preferably about 1 to 2% by weight.

11. A method of preparing a bridged phosphorus compound with the general formula (I) 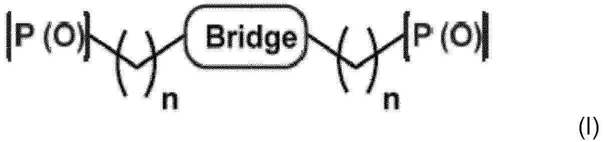 wherein n is 2 or 3, and wherein 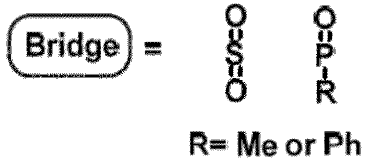 and wherein [**P(O)**]**-H** is selected from the group consisting of: 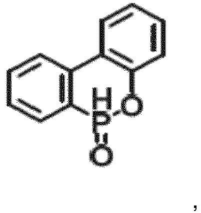 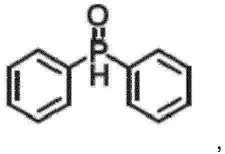 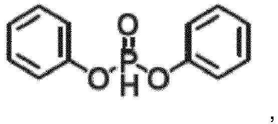 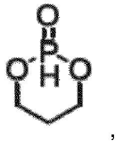 and 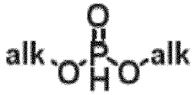 with alk = CH₃, C₂H₅, C₃H₇, or C₄H₉,
comprising the step of charging
- one equivalent of either divinyl sulfone or phenyldivinylphosphine oxide or methyldivinylphospine oxide,
- two equivalents of the compound [**P(O)]-H**, and
- an apolar solvent
into a reaction vessel, followed by heating, cooling to room temperature and separating off a crystalline product thus obtained.
